# EUROPEAN PATENT SPECIFICATION

(11) **EP 4 179 337 B1**
(45) Date of publication and mention of the grant of the patent: **02.09.2026**
(21) Application number: 20750949.8
(22) Date of filing: 10.07.2020
(51) Int. Cl.: G01N 35/00, B01L 9/06, G01N 35/04

(54) **ROBOTIC SAMPLE HANDLING SYSTEM**
ROBOTISCHES PROBENHANDHABUNGSSYSTEM
SYSTÈME ROBOTISÉ DE MANIPULATION D'ÉCHANTILLONS

(43) Date of publication of application: 17.05.2023
(73) Proprietor: TECAN Trading AG, 8708 Männedorf (CH)
(72) Inventor: KINNEY, Patrick, Hayward, CA 94542 (US)
(74) Representative: DeltaPatents B.V.
(86) International application number: PCT/US2020/041601
(87) International publication number: WO 2022/010489

(56) References cited:
- EP-A1- 2 883 667
- EP-A2- 2 294 430
- WO-A1-2019/195677
- TW-A- 200 951 046
- US-B2- 8 191 847

## Description

### TECHNICAL FIELD

The invention relates to a robotic sample handling system for performing sample handling tasks in a laboratory environment, and to a computer-implemented method for controlling a robotic arm of a robotic sample handling system. The invention further relates to a computer-readable medium comprising data representing a computer program for performing the computer-implemented method, and to a module comprising a mechanism which is actuatable by the robotic sample handling system.

### BACKGROUND ART

Robotic sample handling systems are well-known in the field of laboratory automation. Such robotic sample handling systems may be used to automate sample handling tasks, which may include actions such as handling of sample containers, e.g., by picking-and-placing sample containers on a worktable, and interacting with the samples contained in the containers, e.g., by dispensing liquids into a sample container or by pipetting actions. Various other types of sample handling tasks and actions are known as well which may be at least partially automated by such robotic systems.

An example of a robotic sample handling system is an automated pipetting system, as for example described in US20150251315. Such an automated pipetting system, which may also be simply referred to as a 'pipetting robot', may comprise at least one pipette for aspirating and dispensing liquid samples. The robotic arm may be positioned under control of a controller to a given position and may be controlled to carry out a specific action at the given position. This may for example enable a pipette to be lowered into a container to aspirate a liquid therein or to dispense a liquid.

Another example of a robotic sample handling system is a robotic microscope slide processor which may comprise a pick-and-place robotic arm for picking up microscope slides and placing the microscope slides on a processing stage, for example to image and/or process Formalin-Fixed Paraffin-Embedded (FFPE) tissue slides mounted on the microscope slide. Such processing may for example include staining tissue slides, deparaffinating the FFPE tissue slides, extracting biomolecules from tissue slides, performing Fluorescence in situ hybridization (FISH), etc.

There exist various other examples of such robotic sample handling systems, which may in general comprise a work area for holding samples, e.g., in the form of a worktable, and at least one robotic arm which may be controllable to be positioned in a plane over the work area, e.g., in XY direction, and which may be moved towards and away from the work area by being positionable along a Z-axis perpendicular to the work area. The robotic arm may be controlled by a controller, whereby the robotic arm may be 'computer-controlled'. For example, the robotic arm may be controlled by a PC or by a microprocessor which may be integrated into or connected to the robotic arm. This way, the robotic arm may be controlled to perform a sequence of actions so as to be able to perform various sample handling tasks.

A drawback of known robotic sample handling systems is that they may be limited in their ability to automate certain types of actions in sample handling tasks.

EP2294430 A2 discloses a method for handling reaction vessels with a push mechanism.

### SUMMARY OF INVENTION

One of the objects of the invention is to provide a robotic sample handling system, and a computer-implemented method for controlling a robotic arm of a robotic sample handling system, to be able to perform one or more additional types of action when performing sample handling tasks in a laboratory environment.

A first aspect of the invention provides a robotic sample handling system defined by claim 1 for performing sample handling tasks in a laboratory environment.

A further aspect of the invention provides a computer-implemented method defined by claim 12 for controlling a robotic arm of a robotic sample handling system.

A further aspect of the invention provides a computer-readable medium comprising transitory or non-transitory data representing a computer program, the computer program comprising instructions for causing a processor system to perform the computer-implemented method.

The above aspects of the invention may involve a robotic sample handling system which may comprise a work area for holding samples. For example, the work area may be a worktable, which in some embodiments may be part of the robotic sample handling system and on which sample containers may be placed, individually and/or in racks, plates or in any other collective form. The sample containers may for example be liquid containers such as tubes or wells, or microscope slides, etc.

The robotic sample handling system may further comprise at least one robotic arm having at least 2 degrees-of-freedom (DoFs), in that the robotic arm may be positionable in a plane parallel to the work area, thereby having at least one DoF in this plane, as well as perpendicular to the work area, thereby having one other DoF.

The plane may, for ease of reference, also be referred to as a XY plane when considering points in the physical space above the worktable as being defined in a XYZ coordinate system and with the Z-axis of the coordinate system being aligned with the direction of gravity. For example, the robotic arm may be positionable both in X- and in Y-direction in the XY plane (thus having 2 DoFs with respect to the XY plane) but may also be positionable along only one direction (thus having 1 DoF with respect to the XY plane), e.g., in X-direction or in Y-direction or along an oblique direction with respect to either axis. It will be appreciated that while the plane may elsewhere be referred to as a XY plane, the actual control and movement of the robotic arm may take place in a different coordinate system, such as a cylindrical coordinate system.

The control and movement of the robotic arm perpendicular to the work area may also be referred to as a control and movement along a Z-axis. Thereby, the robotic arm may move with its end-effector towards and away from the worktable. This may for example allow a robotic arm which has a gripper as end-effector to pick up a sample on the work area, e.g., by lowering the gripper, gripping the sample container, and then lifting the gripper again. It will be appreciated that, typically, the Z-axis along which the robotic arm may be moved may correspond to the direction of gravity.

In general, such movement along the Z-axis may allow the robotic arm to handle sample containers and to interact with samples in those containers, and to move in the XY plane above any objects placed on the surface of the work area.

Surprisingly, the inventors have devised that is possible to use the robotic arm to operate modules on the work area, and in particular, to operate modules which are actuatable by a downward force being exerted in Z-direction. Namely, the inventors have recognized that the operation of modules which are to be used with samples is highly desirable in a variety of sample handling tasks, but that such operation may be difficult for a robotic arm if the operation requires the robotic arm to exert a force on the module in a non-vertical direction, e.g., horizontally, for example to push a button, to push or pull a lever, etc. Namely, the module may typically not be affixed to the work area in order to be easily repositionable. Accordingly, any horizontal force exerted onto such a module may cause the module to slide or in some cases even tip-over on the work area. To prevent this, a two-handed operation may be needed, in that another robotic arm may need to exert a counterforce on the module so as to keep the module in place. Such a second robotic arm may not always be available. In addition, such horizontal actuation of modules may require complex control mechanisms including planning and collision avoidance since it may require the robotic arm to be lowered to the surface of the work area where it may collide with objects on the work area.

The inventors, however, have recognized that the actuation of modules which are actuatable in downward Z-direction does not suffer from such drawbacks, since a counterforce is inherently present by the module being placed on the surface of the work area. Accordingly, there may be no need for two-handed operation to otherwise provide such a counterforce. In addition, a given module may in many cases be well accessible from above, which may decrease the complexity of controlling the robotic arm since the robotic arm is less likely to bump into another object. In addition, robotic arms may be naturally able to exert a greater amount of force in the Z-direction, in particular in downward direction. Namely, the robotic arm may have been designed such that a sufficient large force can be exerted along the Z-direction to allow the robotic arm to perform tasks such a picking up disposable tips by force and piercing rubber stoppers of vials with mounted fixed tips. Also, the end-effector of the robotic arm may have an elongated shape which is capable of sustaining larger loads along its longitudinal axis than perpendicular to its longitudinal axis, since the latter may result in a large moment which may otherwise bend the end-effector. The inventors have further recognized that modules may be designed such that the energy which is received by actuation in downward direction may be internally, i.e., within the module, redirected in any other direction. Therefore, the need for a module to be actuatable in Z-direction may not need to severely limit the types of mechanisms that can be actuated.

The above measures provide a controller which is configured, for example by software, to control the robotic arm to actuate a mechanism of a module which is to be used in a sample handling task by pushing downward in Z-direction. This may for example comprise the controller being configured to recognize and track a position of the module on the work area, to recognize a type of module, and to suitably position the robotic arm above the module before controlling the robotic arm to push downward in Z-direction so as to actuate the mechanism of the module. Such control may for example comprise controlling the robotic arm to exert a predetermined amount of force for predetermined time to reliably actuate the mechanism, e.g., by setting a consumption limit of one or more electric motors. Such control may for example involve defining a 'push'-type movement action for the robotic arm, which may be evoked as part of a sequence of actions which are to be performed by the robotic arm.

Advantageously, the above measures may allow additional types of actions in sample handling tasks to be automated, which previously may have required manual intervention or which previously had to be entirely avoided in sample handling tasks. This may be highly advantageous in high-throughput applications in which many samples need to be processed using the robotic sample handling system. Various examples of such applications will be elucidated elsewhere in this specification. Furthermore, by the robotic arm actuating the module, it may not be needed for the module itself to have active parts for actuation, such as a built-in electric actuator, which may reduce the complexity and cost of the module. Effectively, it may suffice for the module to be a passive module rather than an active, self-actuating, module.

The mechanism is a push-push mechanism which is arranged to, by repeated pushes, alternatingly assume a latched position and an unlatched position, and the controller is configured to control the robotic arm to operate the push-push mechanism. Push-push mechanisms are known per se and widely used in many fields, such as in kitchen cabinets when they may be used to enable doors to be opened and closed with repeated pushes, or retractable pens which may comprise push-push mechanisms to be able to alternatingly extend and retract a ballpoint with repeated pushes. The module may comprise a push-push mechanism which is arranged to, by repeated pushes, alternatingly assume a latched position and an unlatched position. In particular, the energy which is supplied by the robotic arm by pushing the mechanism may be partially stored in the mechanism, for example by a resilient element such as a spring, and which may be released again by a repeated push. Such a release of energy may then allow the mechanism to release in a direction opposite the pushing direction, e.g., upwards. In general, a push-push mechanism may allow the mechanism to alternatingly assume two states with repeated push-actions in the same direction. In other words, it may not be needed for the robotic arm to change the type of actuation, e.g., from push to pull or from one direction to another direction, so as to cause the mechanism to alternatingly assume the two states. This may make the push-push mechanism highly suitable for use with a robotic arm which is configured to actuate the mechanism by pushing downwards in Z-direction. Various modules are conceived which may make advantageous use of a push-push mechanism. In general, such modules may include any entities which can be used in sample handling tasks, with such modules including mechanical structures, such as stands, mechanical devices such as containers with openable lids, and electronic or electromechanical devices such as centrifuges, shaking modules, heating modules, etc., etc.

For example, in an embodiment, the module is a stand, wherein the stand comprises:
- a receiving part for receiving and removably holding a sample container;
- an effector for acting on a sample which is placed within a predefined vicinity of the effector; and
- the push-push mechanism, arranged to:
   - in the latched position, position the sample container in the predefined vicinity of the effector, and
   - in the unlatched position, position the sample container out of the predefined vicinity of the effector.

It is known in a laboratory environment to position samples in a vicinity of an effector, with the term 'effector' referring to an object or device which may act upon a sample when the sample is brought into the vicinity of the effector. Such acting may for example involve heat transfer, e.g., by radiation, convection or conduction, or various (other) forms of radiation, such as electromagnetic radiation or acoustic radiation. A non-limiting example of such an effector is a magnet which may act on the sample by attracting paramagnetic particles in the sample when the sample is brought in the magnet's magnetic field, which may be used in so-called magnetic bead separation (MBS) processes. Another example of an effector is a heat source which may act on the sample by heating the sample. Yet another example of an effector is a vibrator, such as an ultrasonic transducer, which may act on the sample by subjecting the sample to vibrations. The push-push mechanism may be integrated into the module in such a way that in the latched position, the receiving part and the effector are mutually positioned so that the sample is brought into the effector's vicinity by which the effector may act on the sample, while in the unlatched position, the sample may be removed from the effector's vicinity causing the effector not being able to act on the sample, or only with an negligible strength. Here, the term 'vicinity' may be considered as any particular distance in which the effector can act on the sample, and may in general involve i) the sample contained in the sample container and held by the receiving part and ii) the effector, being brought nearer to each other than in the unlatched position.

While it is known per se to use a robotic arm to bring a sample container in vicinity of such an effector, the specific use of a stand which comprises a push-push mechanism which is vertically actuatable means that the robotic arm may easily operate the mechanism, e.g., without complex movements or the need for collision avoidance with other objects on the work area. In particular, sample handling tasks may frequently involve the use of the aforementioned effectors; by providing the above-described stand and configuring the robotic arm to operate the stand's push-push mechanism, such sample handling tasks may be further, and in some cases, entirely automated. In this respect, it is noted that the module may be referred to as a stand by being able to stand on the surface of the work area, thereby effectively enabling the sample container(s) held in the stand to 'stand' on the surface of the work area. It will be appreciated that the module may (also) be referred to by the function of its effector, e.g., as a 'chiller' when the module/stand contains a cold source as effector.

In an embodiment, the controller is configured to control the robotic arm to actuate the push-push mechanism by at least one of:
- pushing on a part of the stand; and
- pushing on a part of the sample container.

The push-push mechanism may be an integral part of the stand. Accordingly, the push-push mechanism may be actuated by pushing on a part of the stand. For example, if the stand comprises an opening or recess for receiving a sample container or set of sample containers, the push-push mechanism may be integrated into a peripheral part of the stand which surrounds the opening or recess, and the robotic arm may be configured to actuate the push-push mechanism by exerting a downward force on the peripheral part. In other embodiments, the receiving part may be coupled to the push-push mechanism, with the latter being actuatable by the robotic arm pushing down on the sample container and thereby pushing down on the receiving part. Namely, if the sample container is securely held by the receiving part, a force exerted on the sample container may thereby be transmitted to the receiving part. This may for example enable a pipetting robot to operate the push-push mechanism by pressing downwards with a fixed or disposable tip onto the bottom of the sample container.

In an embodiment, the effector comprises at least one of:
- a magnet for subjecting the sample to a magnetic field;
- a heat source for heating the sample;
- a cold source for cooling the sample;
- a vibrator for subjecting the sample to vibration;
- a water bath for receiving the sample container; and
- a radiation source for irradiating the sample.

The above are nonlimiting examples of possible types of effectors which may act on the sample in the latched position. It will be appreciated that the stand may comprise a plurality of effectors, e.g., to be able to act upon a plurality of sample containers. In some embodiments, the stand may comprise a plurality of effectors of the same type, such as an array of magnets to act upon samples of an array of sample containers, while in other embodiments, the stand may comprise different types of effectors, e.g., to be able to simultaneously act on a sample with different effectors, e.g., to simultaneously subject a sample to a heat source and to a magnetic field.

In an embodiment, the sample container is one of:
- a liquid container;
- a glass or plastic slide.

Examples of liquid containers include, but are not limited to, tubes, troughs, and wells of a microplate, for example according to ANSI (American National Standards Institute)/SLAS Microplate Standards 1 to 4 - 2004. For example, the stand may be arranged to receive an individual tube or a rack or an array of tubes. A non-limiting example of a tube is an Eppendorf tube ^{®}. In another example, the stand may be arranged to receive a microplate containing an array of wells, or a strip of wells. The wells may have any suitable shape, such as a V-shape or a U-shape. In yet another example, the stand may be arranged to receive one or more glass or plastic slides, such as microscope slides. For example, the stand may be arranged to receive a plurality of such slides when placed in an adapter frame. The adapter frame may, but does not need to, have a same or similar footprint as a standardized microplate, thereby enabling the adapter frame to fit an opening or recess for such a microplate.

In an embodiment,
- the sample container is a liquid container;
- the effector comprises a magnet for subjecting a liquid sample in the liquid container to a magnetic field; and
- the controller is configured to control the robotic arm to perform at least part of an automated magnetic bead separation process by operating the push-push mechanism to bring the liquid sample into and out of the magnetic field.

Such magnetic bead separation (MBS) processes are known per se and frequently used in sample handling tasks, for example for nucleic acid (NA) purification. By providing the above-described stand comprising a push-push mechanism and configuring the robotic arm to operate the push-push mechanism, such magnetic bead separation processes may be further, and in some cases, entirely automated.

In an embodiment, the robotic arm comprises a robotic head with at least one gripper, wherein the controller is configured to control the robotic arm to actuate the mechanism with the at least one gripper. For example, the gripper may be a horizontally extending arm, with the robotic head comprising a pair of grippers to grip objects such as sample containers, e.g., for pick-and-place operations. The robotic arm may be configured to actuate the mechanism by pushing downwards with the gripper on a part of the module, or by simultaneously pushing downwards with multiple grippers on different parts of the module. This may allow the robotic arm to operate the module's mechanism without a need to temporarily dismount or otherwise remove the gripper from the robotic head, and thereby save time and reduce process complexity.

In an embodiment, the robotic arm comprises a liquid-handling head, wherein the controller is configured to control the robotic arm to actuate the mechanism with the liquid-handling head. Robotic arms with liquid-handling heads are frequently used in liquid handling processes. By actuating the mechanism with such a liquid-handling head, it may not be needed to provide a different robotic head for the operation of the mechanism, which may save time and reduce process complexity.

In an embodiment, the liquid-handling head is arranged to mount a disposable tip, wherein the controller is configured to control the robotic arm to actuate the mechanism with the liquid-handling head with or without a mounted disposable tip.

In an embodiment, the robotic sample handling system is one of:
- a robotic liquid handling system;
- an automated pipetting system;
- an automated robotic gripping system; and
- a microscope slide processor.

It will be appreciated by those skilled in the art that two or more of the above-mentioned embodiments, implementations, and/or aspects of the invention may be combined in any way deemed useful.

Modifications and variations of any one of the robotic sample handling systems, modules, computer-implemented (CI) methods and/or computer programs, which correspond to the described modifications and variations of another one of these systems, modules, Cl-methods and/or computer programs, and vice versa, may be carried out by a person skilled in the art on the basis of the present description.

### BRIEF DESCRIPTIONS OF DRAWINGS

These and other aspects of the invention are apparent from and will be elucidated with reference to the embodiments described hereinafter. In the drawings,
Figs. 1A-1F show a stand for removably holding a sample container, wherein the stand comprises a push-push module which is actuatable by repeated pushes in Z-direction to alternatingly bring the sample container in and out of a vicinity of an effector, such as a magnet, acting on the sample in the sample container;
Figs. 2A-2F show an embodiment of a stand in which the effector, instead of the sample container, is moved by actuation of the push-push mechanism;
Fig. 3 shows another embodiment of a stand in which the effector, instead of the sample container, is moved by actuation of the push-push mechanism;
Figs. 4A-4C show an embodiment of a stand for removably holding a microplate comprising a plurality of wells, wherein the wells are jointly brought in and out of vicinity of effectors by repeated downward pushes onto a part of the stand;
Fig. 5 shows a schematic overview of a robotic sample handling system which is configured to operate a module which is actuatable by the downward force;
Fig. 6A shows a liquid-handling head which may be used by a robotic liquid handling system to operate a module which is actuatable by the downward force;
Fig. 6B shows a robotic head which comprises a pair of grippers, each of which may be used to operate a module which is actuatable by the downward force;
Figs. 7A-7B show a chiller module comprising a lid which may be actuatable by downward force so as to alternatingly open and close the lid;
Figs. 8A-8C show a horizontal gripper module which may be actuatable by downward force to grip and release objects with horizontally extending grippers.

It should be noted that items which have the same reference numbers in different Figures, have the same structural features and the same functions, or are the same signals. Where the function and/or structure of such an item has been explained, there is no necessity for repeated explanation thereof in the detailed description.

### Reference signs list

The following list of references signs is provided for facilitating the interpretation of the drawings and shall not be construed as limiting the claims.
- 100: robotic sample handling system
- 110: robotic sample handling instrument
- 120: worktable
- 140, 142: robotic arm
- 150: liquid-handling head
- 152: pipette
- 154: connecting piece
- 156: disposable tip
- 160: robotic head
- 162: grippers
- 180: controller

- 200-206: stand
- 220, 226: receiving part (opening)
- 250-256: push-push mechanism

- 260-264: exerted downward force, push action

- 280: downward movement (push) into latched position
- 282: upward movement (spring back) caused by biasing element
- 284: download movement (push) to unlatch
- 286: upward movement (release) into unlatched position

- 300, 302: effector
- 310: vicinity of effector

- 400: sample container
- 410: microplate
- 412: well
- 420: liquid sample
- 430: rack of tubes

- 500: chiller
- 510: lid
- 520: pin
- 530: slider
- 540: platform
- 550: spring
- 600: horizontal gripper module
- 610: grippers
- 620: receiving bore
- 625: support
- 630: push-push mechanism
- 635: spring
- 640: linkage
- 642: vertical motion
- 644: unlatched position (grip)
- 646: latched position (release)
- 650: slider
- 652: horizontal motion
- 660: object
- 670: object holder

### DETAILED DESCRIPTION OF EMBODIMENTS

The following embodiments relate to a robotic sample handling system for performing sample handling tasks in a laboratory environment. The robotic sample handling system may in general comprise a robotic arm which may be configured to actuate a module which comprises a mechanism which is actuatable by downward force. Specifically, the robotic arm may be controlled, e.g., by a controller of the robotic sample handling system, to actuate the mechanism of the module by pushing downward in Z-direction. The module comprises a push-push mechanism which may be operated by the robotic arm, with the module being in some embodiments a stand which allows a sample container containing a sample to be brought into vicinity of an effector, such as a magnet, heat source, cold source, vibrator, radiation source, etc., so as to enable the effector to act on the sample.

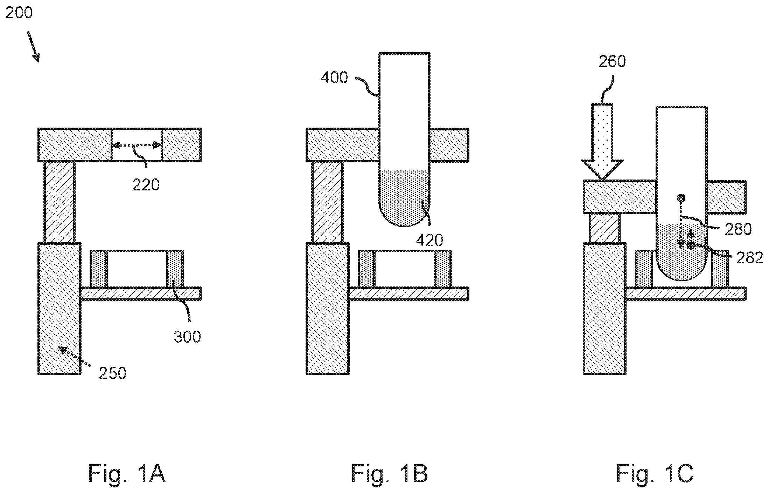

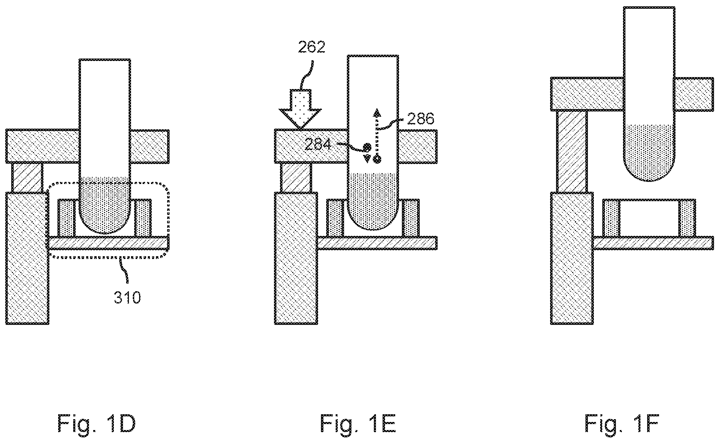

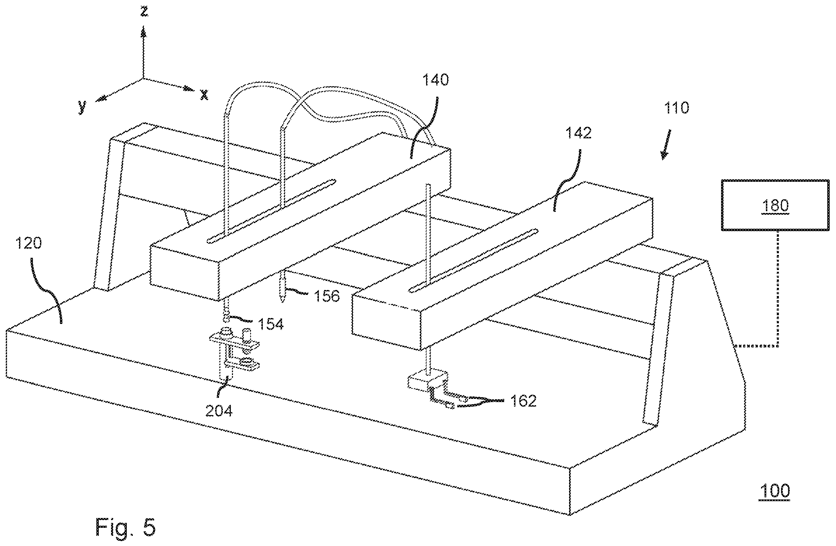

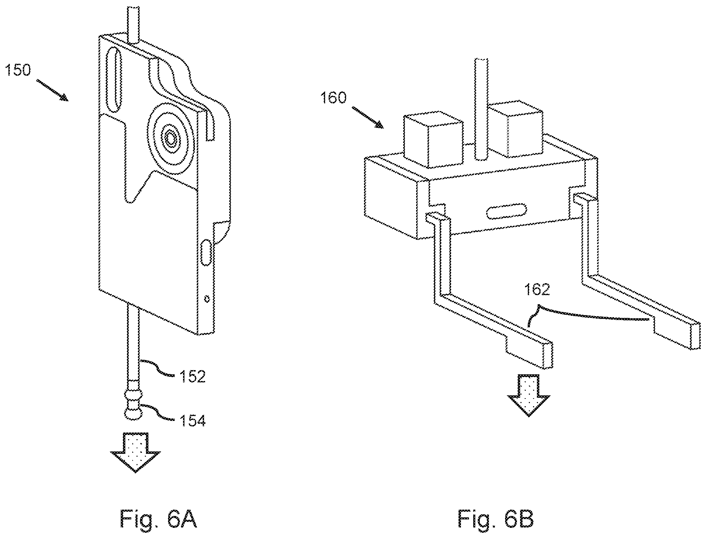

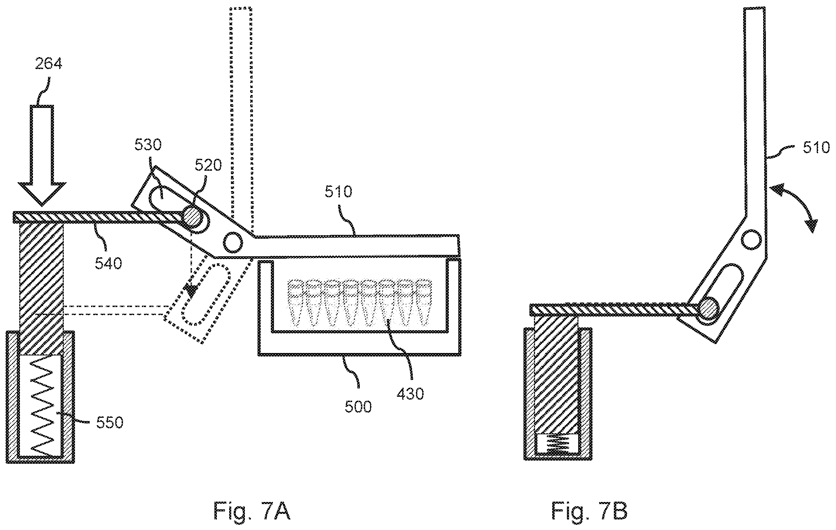

Figs. 1A-4C show various embodiments of such a stand which may differ in aspects such as the way in which the sample container and the effector are moveable with respect to each other, while Fig. 5 shows an embodiment of the robotic sample handling system and Figs. 6A and 6B each show a respective end-effector (also referred to as 'head') of a robotic arm which may be used to actuate the mechanism. Finally, Fig. 7A and subsequent figures show alternative modules and mechanisms which may be actuated by the robotic arm by pushing downward in Z-direction.

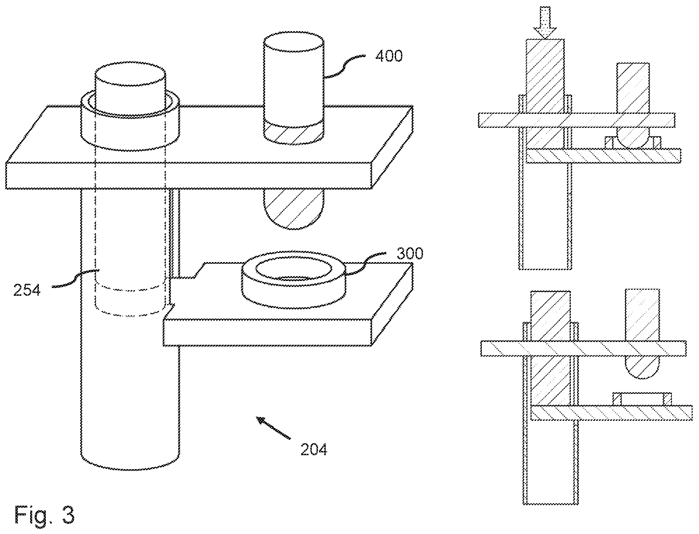

**Figs. 1A-1F** show a cross-sectional view of at least part of a stand 200 for removably holding a sample container, with the different figures illustrating the actuation of the stand 200. The stand 200 may be arranged to stand on a surface, such as a surface of a work area (e.g., worktable) of the robotic sample handling system. For that purpose, the stand 200 may further comprise a foot (not shown in Figs. 1A-1F) or may be in any other way arranged so as to stably stand on the surface. The stand 200 is shown to comprise a receiving part in the form of an opening 220 which may allow a sample container 400 containing a sample 420 to be placed in the opening 220. Thereby, the stand 200 may receive and removably hold the sample container 400. In this respect, it is noted that instead of an opening 220, the stand may also comprise a recess which may be shaped to receive and removably hold the sample container. As is also shown in Fig. 3, which shows an isometric view of a stand, the opening 220 may for example be a circular opening which may be tapered or in any other way arranged to hold a tube-shaped sample container in a stable yet removable manner. Accordingly, as also shown in Fig. 1B, the sample container 400 may be placed in the stand 200, for example by the robotic arm picking up the sample container 400 and placing it in the stand 200, or by another system, device, apparatus or machine or manually.

The stand 200 may further comprise an internal mechanism 250 (not explicitly shown) which is actuatable by downward force. In particular, the mechanism is a push-push mechanism which is arranged to, by repeated pushes, alternatingly assume a latched position and an unlatched position. Such push-push mechanisms are known per se and may also be referred to as push-to-latch or push-to-release (or open) mechanisms, referring to such mechanisms providing a latched (or closed) and a released (or open) position. For example, such mechanisms are known from cabinets where they may be used to enable cabinet doors to be opened and closed by repeated pushes, but also from retractable pens and various other fields.

Figs. 1A-1B show the mechanism 250 in an unlatched position which causes the sample container 400 to be held above and thereby out of vicinity of an effector 300. The effector 300 may be generally be configured to act on a sample which is placed within a predefined vicinity of the effector. As also elucidated elsewhere, the effector may take various forms, including but not limited to a magnet for subjecting the sample to a magnetic field, a heat source for heating the sample, a cold source for cooling the sample, a vibrator for subjecting the sample to vibration, a water bath for receiving the sample container, and a radiation source for irradiating the sample.

The following assumes the effector 300 to be a magnet, such as a ring-shaped magnet (see also Fig. 3 showing an isometric view of a ring-shaped magnet), with the understanding that any other type of effector may be used as well.

It can be seen in Figs. 1A-1B that in the unlatched position, the sample container 400 held by the receiving part 220 of the stand is held well above the magnet 300 which may cause the sample 420 to be sufficiently outside of the magnetic field generated by the magnet. In other words, in the unlatched position, the sample 420 may not be subjected to the magnetic field generated by the magnet 300, or only to an inconsequential degree. Fig. 1C illustrates an actuation of the push-push mechanism 250 by a downward force 260 being exerted on an upper part of the stand, e.g., on an movable platform in which the opening 220 is provided. This downward force 260 may be exerted by the robotic arm, e.g., by the robotic arm pushing with its robotic head onto the platform in which the opening 220 is provided. Such an actuation may be a selectable action of the robotic arm, in that the controller may allow such an action to be selected, e.g. as part of a sequence of actions defining a sample handing task.

The push-push mechanism 250 may be connected with the movable platform in which the opening 220 is provided. As a result, the downward force 260 may cause the push-push mechanism 250 to move into its latched position and the movable platform holding the sample container 400 to jointly move downwards, as illustrated by an arrow 280. The push-push mechanism 250 may be spring-loaded or may comprise any other type of resilient element, which may cause the push-push mechanism to partially spring-back 282 into a latched position after the downward force 260 ceases to be applied. As is shown in Fig. 1D, in the latched position, the sample container 400 with the sample 420 may now be in a vicinity 310 of the magnet 300.

It will be appreciated that the vicinity 310 in Fig. 1D may be shown as an well-defined neighborhood only for illustration purposes, since for some types of effectors, the strength with which the effector may act on a sample may depend on the distance to the sample, e.g., with the strength having an inverse relation to the square of the distance. For such types of effectors, the vicinity may be defined as any neighborhood or position in which the strength is still deemed sufficient for the particular application, e.g., above a threshold. For example, in case of a magnetic field, the vicinity may be defined as any position within the magnetic field in which the magnetic field is deemed sufficiently strong. It is noted that for some other types of effectors, there may exist a well-defined neighborhood or position in which the effector may act on the sample. For example, in case of heating or chilling, the vicinity may be defined as any position in which the sample container physically contacts the effector, e.g., to allow heat exchange by conduction. Another example is a water bath, where the vicinity may be defined as any position in which the sample container is at least partially immersed into the water bath. Yet another example is a radiation source, where the vicinity may be defined as any position within the radiation beam.

As will be elucidated elsewhere, by bringing the sample container 400 and in particular the sample 420 in the vicinity 310 of the magnet 300, the magnet 300 may act on the sample. For example, in a magnetic bead separation (MBS) process which is known per se and in which beads have been added to the sample 420, this may cause the beads and any attached cells, biomolecules like proteins or nucleic acids or any other particles to be pulled to the walls of the sample container 400, after which the robotic arm may carry out a pipetting operation.

As illustrated in Figs. 1E-1F, the sample may then be brought out of the magnetic field of the magnet 300, namely by the robotic arm again exerting a downward force 262 on the stand, which may cause the push-push mechanism 250 to become unlatched via a small downward motion 284, and then cause the sample container 400 via the spring-loading of the push-push mechanism 250 to be moved upwards 286 and thereby out of the vicinity of the magnet 300. These steps may then be followed by subsequent processing steps. In another example, the sample 420 may be brought back and forth into the magnetic field to collect or disperse beads.

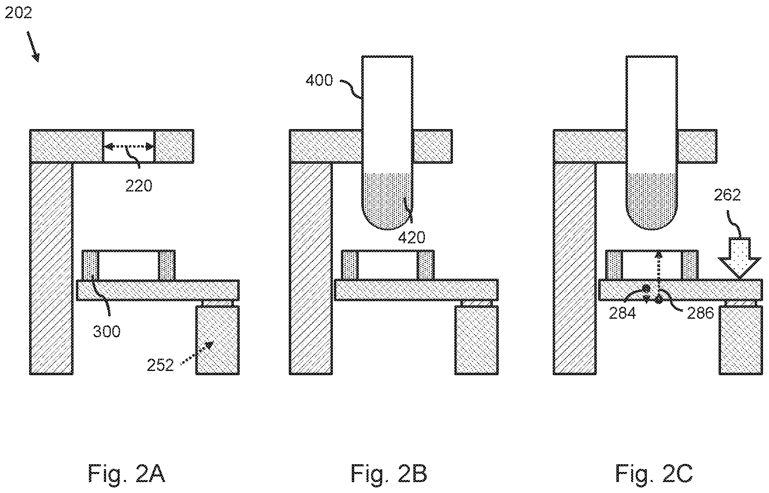

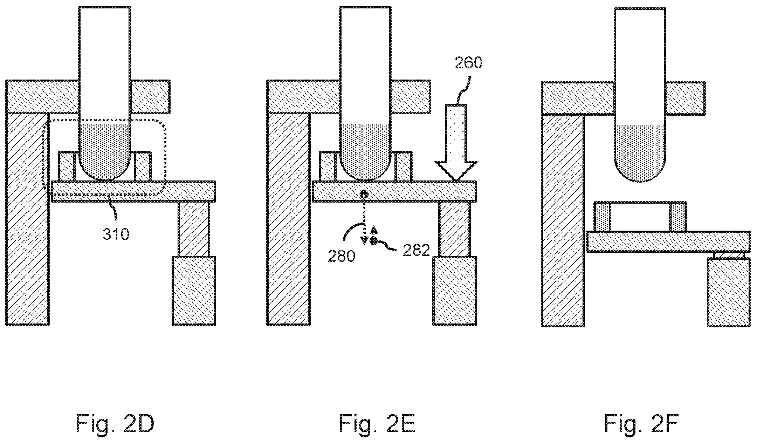

**Figs. 2A-2F** show an embodiment of a stand 202 in which the effector, instead of the sample container, is moved by actuation of the push-push mechanism 252. This embodiment represents an alternative to the stand of Figs. 1A-1F, in that the push-push mechanism 252 may in the stand 202 be connected to a movable platform which comprises the magnet 300, with repeated pushes on the movable platform causing the magnet 300 to be positioned towards and away from the sample container 400, instead of the other way around. The example of Figs. 2A-2F may otherwise be functionally equivalent or at least similar to the stand 200 shown in Figs. 1A-1F.

**Fig. 3** shows another embodiment of a stand 204 in which the effector, i.e., the magnet 300, is moved by actuation of the push-push mechanism instead of the sample container 400. Here, the actuatable part of the stand 204 is reachable via an opening in the platform of the receiving part. The stand 204 of Fig. 3 may otherwise be functionally equivalent or at least similar to the stand 202 shown in Figs. 2A-2F.

It will be appreciated that various other embodiments of the stand are envisaged, for example comprising different (types) of effectors, etc. In particular, the skilled person will recognize that there are various alternatives not forming part of the present invention for using a push-push mechanism having a latched and unlatched position to position a sample container and an effector towards and away from each other.

For example, in some embodiments, a plurality of sample containers may be moved jointly in and out of the vicinity of an effector, e.g., by jointly moving a rack, a plate, a strip or a frame holding sample containers in and out of the effector's vicinity.

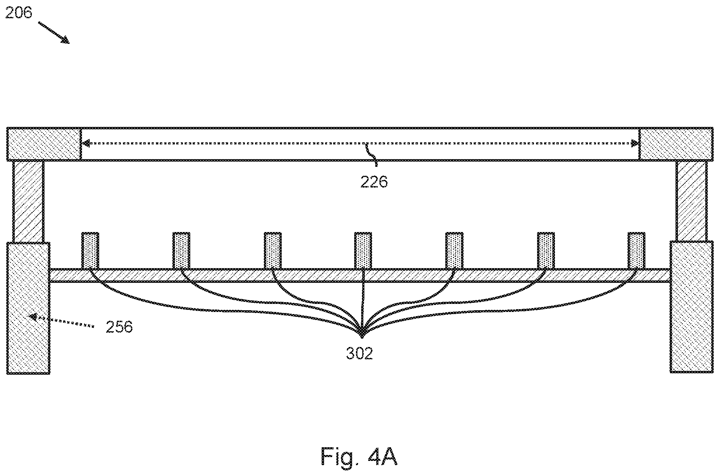

**Figs. 4A-4C** show a cross-sectional view of an embodiment of a stand 206 for removably holding a microplate comprising a plurality of wells. The stand 206 is shown to comprise an opening 226 for receiving the microplate. The microplate may for example adhere to ANSI/SLAS Microplate Standards 1 to 4 - 2004; the opening 226 may thus be suitably dimensioned to receive such a microplate 410. For example, the opening 226 may be dimensioned to receive microplates of 127.76mm x 85.48mm.

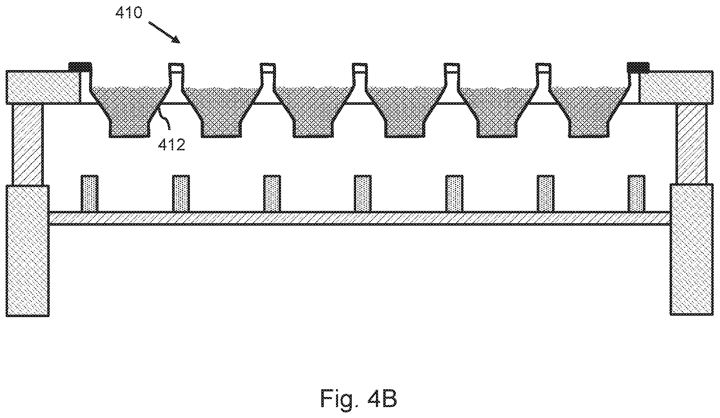

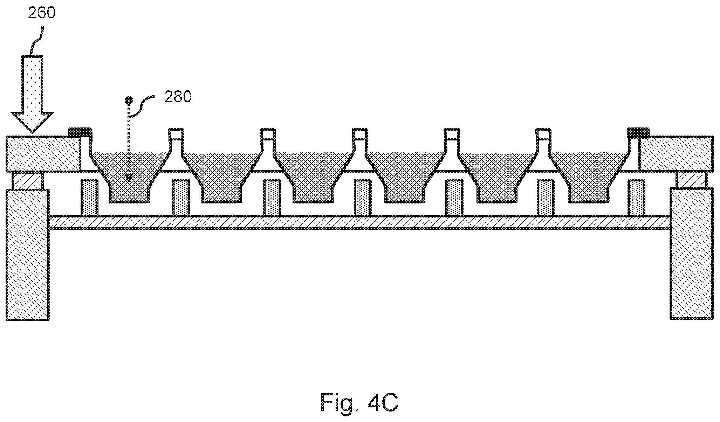

The receiving of microplates in the opening 226 of the stand 206 is schematically shown in Fig. 4B, in which a microplate 410 with a plurality of wells 412 shown to be placed in the opening, e.g., by the opening receiving a main body of the microplate and a projection of the microplate resting on a rim of the opening 226. It will be appreciated that the visualization of the microplate is merely for illustration purposes, e.g., showing a merely exemplary number of wells and showing each well as having a merely exemplary shape. As is shown in Fig. 4C, the stand 206 may be actuated by a downward force 260 being exerted by the robotic arm on at least one side of the stand 206, causing the microplate to be moved 280 in a vicinity of a plurality of effectors 302. The plurality of effectors 302 may for example be arranged in an array so that each well may be in a vicinity of at least one effector. Although not shown in Figs. 4A-4C, the microplate 410 may then be released from the vicinity of the plurality of effectors 302 by a repeated push by the robotic arm onto the stand 206.

In some examples, there may be a same or similar number of effectors as there are sample containers. For example, for a 24 (4x6) microplate, there may be 24 effectors. For example, there may be a ring-shaped magnet for each of the wells of the microplate. In other examples, they may be fewer effectors than there may be sample containers. For example, for a 96-well microplate, there may be 4x6 magnets arranged in an equidistant array. This may still ensure a sufficient strength of the magnetic field at each of the wells. In another example, if the effector is a plate-shaped heat source, a single heat source may suffice for heating all samples simultaneously. Yet another example is a water bath, of which there may be one for jointly receiving all sample containers. It is also envisaged for there being more effectors than sample containers.

With continued reference to Figs. 4A-4C, a stand similar to the Figs. 4A-4C example may be used for de-paraffinization of paraffinized tissue slides (e.g., formaldehyde-fixed paraffin-embedded tissue, FFPE). Instead of comprising magnets 302, the stand may in this example comprise a heat source and may be configured to receive, e.g., in an adapter having the same footprint as a microplate, a set of paraffinized tissue slides to be brought in contact with the heat source so as to melt the paraffin. The robotic arm may control the melting process by operating the push-push mechanism to temporarily bring the slides in contact with the heat source. After melting, the slides with molten paraffin may be treated with organic solvent, e.g., by the robotic arm dispensing the organic solvent via a liquid-handling head, e.g., a pipette, so as to remove the paraffin from the slides for further downstream processing of the slides.

**Fig. 5** shows a schematic overview of a robotic sample handling system 100 which may comprise a robotic sample handling instrument 110 and a controller 180 and which may be configured to operate a module which is actuatable by downward force. The module may for example be the stand 204 of Fig. 3. Fig. 5 shows the robotic sample handling instrument 110, and thereby the robotic sample handling system 100, to comprise a work area 120 for holding the module and generally for holding samples. An example of a work area is a worktable. In the example of Fig. 5, the robotic sample handling instrument 110, and thereby the robotic sample handling system 100, is further shown to comprise two robotic arms 140, 142, but may also have one robotic arm or more than two robotic arms. In the example of Fig. 5, each robotic arm 140, 142 may be controllable to be positioned in a XY plane parallel to the work area and along a Z-axis perpendicular to the work area. For that purpose, the robotic sample handling system 100 may comprise the controller 180 which may be configured to control the robotic arms 140, 142 to position and operate a respective robotic arm as part of a sample handling task. As will be elucidated elsewhere in this specification, the controller 180 may be physically integrated into the robotic sample handling instrument 110 but may also be an external controller (as shown in Fig. 5), such as a PC.

Fig. 5 further shows the robotic arms 140, 142 of the robotic sample handling instrument 110 to comprise different heads, with the first robotic arm comprising two liquid handling heads both having pipettes each having a connecting piece 154 for a tip attached, with Fig. 5 showing such a disposable tip 156 being mounted to one of the two pipettes. Fig. 6A shows such a liquid handling head in more detail. The second robotic arm 142 is shown to comprise a robotic head to which a pair of grippers 162 is mounted. Fig. 6B shows such a robotic head in more detail.

**Fig. 6A** shows a liquid-handling head 150 which comprises a pipette 152 and a connecting piece 154 to which a tip (not shown) may be connected and thereby mounted. The robotic sample handling system may actuate a module which is actuatable by downward force by pushing downwards in Z-direction with a mounted tip or without a mounted tip. In the latter case, the module may be actuated by the robotic arm pushing downwards with the connecting piece 154 or with the pipette 152.

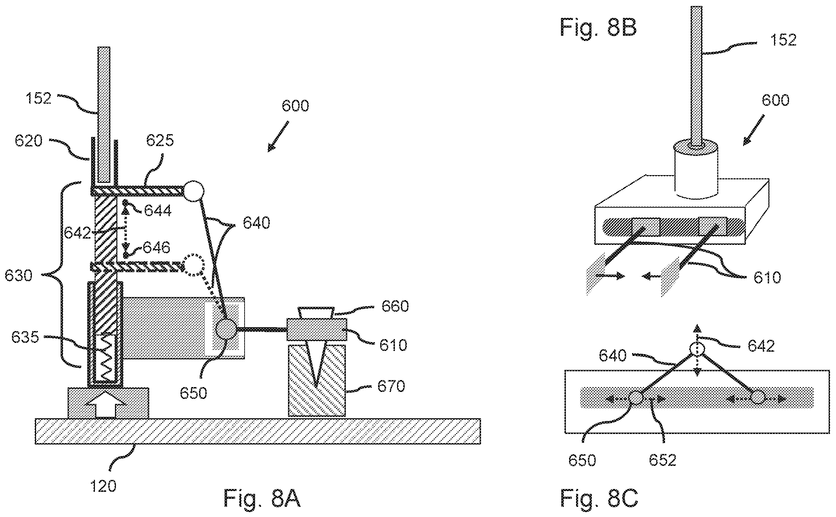

**Fig. 6B** shows a robotic head 160 which comprises a pair of grippers 162. The robotic sample handling system may actuate a module which is actuatable by downward force by pushing downwards in Z-direction with one of the grippers 162 or with both grippers, e.g., by simultaneously pushing on different parts of the module, for example in case where the module comprises multiple push-push mechanisms as for example shown in Fig. 8.

With continued reference to Figs. 5-6B, in general, the controller 180 may be configured to control a respective robotic arm 140, 142 to actuate a module which comprises a mechanism which is actuatable by downward force. For example, a respective robotic arm 140, 142 may be controlled to actuate the push-push mechanism of the stand 254 by pushing downward in Z-direction with an end-effector of the respective robotic arm 140, 142. In a specific example, the robotic arm 140 may be controlled to actuate the stand 154 with one of its liquid-handling heads, e.g., with or without a mounted tip 156. In some examples, the controller 180 may be configured to control the robotic arm 140 to pick up and mount a disposable tip 156, then actuate the push-push mechanism using the disposable tip 156, and then proceed to aspirate a sample/reagent using the disposable tip 156. In other examples, the controller 180 may be configured to control the robotic arm 140 to actuate the push-push mechanism with a mounted tip 156, such as a disposable tip or a fixed tip. A non-limiting example of a fixed tip is a steel cannula. In another example, the controller 180 may be configured to control the robotic arm 142 to actuate a module's mechanism with at least one of the grippers 162, e.g., by pushing downward with the gripper on the module. In general, the controller 180 may be configured to control a respective robotic arm 140, 142 to actuate the push-push mechanism of the stand 154 by, instead of pushing on a part of the stand 154, pushing on a part of the sample container, for example by pushing downwards on a bottom or rim of the sample container. For example, the robotic arm 140 may be controlled to push with a respective liquid-handling head, e.g., with the connecting piece 154 or the tip 156, on a bottom or rim or any other surface of a sample container and thereby actuate the push-push mechanism of the stand 154. In general, multiple robotic heads may be used to push simultaneously, for example on different parts of a module or on different sample containers. Additionally, or alternatively, multiple robotic arms may be used to push simultaneously on the different parts of a module or on different sample containers.

In general, the robotic sample handling system 100 may be used to handle liquid samples, and may thus also be referred to as robotic liquid handling system. In particular, if the robotic liquid handling system is, as in the example of Fig. 5, arranged for automating pipetting tasks, the robotic liquid handling system may also be referred to as an automated pipetting system. The robotic sample handling system may in general also take various other forms, such as an automated robotic gripping system, e.g., comprising the robotic arm 142, or as a microscope slide processor, etc., etc.

It will be appreciated that the robotic arm may be controlled to actuate various mechanisms besides a push-push mechanism. In general, such a mechanism may convert energy generated by the linear downward motion of the robotic arm into another type of motion, e.g., into linear motion in another direction and/or into rotary motion, etc. The mechanism may also temporarily store the energy generated by the linear downward motion, e.g., by compressing a spring or another resilient element.

**Figs. 7A-7B** show a chiller module 500 which is shown to be able to receive a rack of tubes 430 and which may comprise a Peltier element or a heat exchange coil as effector (not separately shown). The chiller module 500 may comprise a lid 510 which may be pivotable about an axis and which may be actuatable by the robotic arm pushing downwards 264 on a movable platform 540 which is coupled via a pin 520 to a slider 530 in the lid 510, by which the linear downward motion of the movable platform is converted into a pivoting motion causing the lid 510 to open. To enable the lid to close after said actuation by the robotic arm, a spring 550 may be provided which may be compressed by the downward motion and which may again expand after actuation, causing the lid 510 to close. As such, the chiller module 500 may have a 'normally closed'-type of lid 510 which may be opened by the robotic arm with only a push.

**Figs. 8A-8C** show a horizontal gripper module 600 which comprises a pair of horizontally extending grippers 610, with the grippers 610 being actuatable by the robotic arm exerting a downward force onto the horizontal gripper module 600. In particular, Fig. 8A shows a cross-sectional view of the horizontal gripper module 600 without an enclosure, while Fig. 8B shows a perspective view of the horizontal gripper module 600 with an enclosure, and while Fig. 8C shows a linkage-and-slider assembly of the horizontal gripper module 600 in more detail. In this respect, it is noted that in Fig. 8A, the vertical dimensions of the interior of the horizontal gripper module 600 have been expanded relative to the horizontal dimensions for ease of illustration.

As can be seen in Figs. 8A and 8B, the horizontal gripper module 600 may comprise a receiving bore 620 for receiving a distal part of the liquid handling head 152, or in general, a distal part of the end-effector of the robotic arm. The shape and dimensions of the receiving bore 620 may be such that a friction fit with the liquid handling head 152 may be established when it is inserted into the receiving bore 620.

The horizontal gripper module 600 may further comprise a push-push mechanism 630 which may comprise a spring 635 and which may be connected to an elongated support 625 of the receiving bore 620. Accordingly, the push-push mechanism 630 may be actuated by the liquid handling head 152 repeatedly pushing downwards on the elongated support 625, which may cause the push-push mechanism 630 to alternatingly assume a latched position 646 and an unlatched position 644 (schematically shown in Fig. 8A by respective positions 644, 646 of the support 625).

As can be seen in Figs. 8A and 8C, the support of the receiving bore 620 may be connected to a respective linkage 640, which in turn may be connected to a respective slider 650, which in turn may be connected to a respective gripper 610. This linkage-and-slider assembly may cause a vertical motion 642 of the support to be translated into a horizontal motion 652 of the respective slider 650 and thereby of the respective gripper 610. In particular, this mechanism may cause the push-push mechanism 630 to, in the unlatched position 644, position the grippers 610 proximately of each other so as to be able to grip an object 660, e.g., from an object holder 670, while in the latched position 646, the grippers 610 may be positioned distally from each other to release the object 660. By way of the spring force exerted by the spring 635, the grippers 610 may be pushed towards each other when the push-push mechanism 630 is in the unlatched position 644 to be able to exert sufficient grip on the object 660.

Accordingly, the robotic arm may pick-up the horizontal gripper module 600 with the liquid handling head 152 and may, given the friction fit, carry the module 600 around the worktable 120. Actuation of gripping may occur by pushing the module 600 down against a resistance from beneath the module 600, such as the worktable 120.

It will be appreciated that instead of the linkage-and-slider assembly, the horizontal gripper module 600 may comprise any suitable mechanism for mechanically translating vertical movement of the push-push mechanism between the latched and unlatched position into a horizontal movement of a pair of grippers between a released position, in which the grippers are distal of each other to release an object, and a gripping position, in which the grippers are proximate to each other to grip an object. A spring force may push the grippers towards each other in the unlatched position.

In general, the controller may be configured, e.g., by hardware design or software, to perform the operations described in this specification in as far as pertaining to the control of the robotic arm. The controller may be embodied by an external computer, e.g., a PC or laptop or workstation, which may be connected via a communication interface, such as an USB interface or any other serial or parallel interface or a local network interface or personal network interface, to the robotic sample handling instrument to which the robotic arm(s) are attached. Here, the adjective 'external' may refer to the controller not being part of the robotic sample handling instrument. In some other embodiments, the controller may be embodied by an embedded computer which may be part of the robotic sample handling instrument.

In general, the controller may comprise one or more (micro)processors which execute appropriate software, such as one or more x86 or ARM-based processors (CPUs), but also by a combination or system of such processors and/or other types of processing units. Software implementing the functionality of the controller may have been stored in a corresponding memory or memories, e.g., in volatile memory such as RAM or in non-volatile memory such as Flash. Alternatively, the functionality of the controller may be implemented in the form of programmable logic, e.g., as a Field-Programmable Gate Array (FPGA). In general, the controller may be implemented as one or a combination of circuits. In general, the controller may be implemented in a distributed manner, e.g., distributed over different servers or distributed according to a client-server model. The controller may also be implemented remotely, e.g., by control software running on one or more cloud-based servers.

It is noted that any of the computer-implemented methods described in this specification, for example in any of the claims, may be implemented as software, as dedicated hardware, or as a combination of both. Instructions for the computer, e.g., executable code, may be stored on a computer readable medium, e.g., in the form of a series of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, etc.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A robotic sample handling system (100) for performing sample handling tasks in a laboratory environment, comprising:
- a work area (120) for holding samples;
- at least one robotic arm (140, 142) which is controllable to be positioned in a plane parallel to the work area and along a Z-axis perpendicular to the work area;
- a controller (180) configured to control the robotic arm to position and operate the robotic arm as part of a sample handling task;
wherein the work area comprises a module (200-206, 500, 600) for use with one or more of the samples, wherein the module comprises a mechanism (250-256, 630) which is actuatable by downward force, wherein the mechanism is a push-push mechanism which is arranged to, by repeated pushes, alternatingly assume a latched position and an unlatched position and wherein the controller is configured to control the robotic arm to operate the push-push mechanism by pushing downward in Z-direction.

2. The robotic sample handling system (100) according to claim 1, wherein the module is a stand (200-206), wherein the stand comprises:
- a receiving part (220-226) for receiving and removably holding a sample container (400, 410);
- an effector (300) for acting on a sample which is placed within a predefined vicinity of the effector; and
- the push-push mechanism (250-256), arranged to:
- in the latched position, position (280) the sample container in the predefined vicinity (310) of the effector (300), and
- in the unlatched position, position (286) the sample container out of the predefined vicinity (310) of the effector (300).

3. The robotic sample handling system (100) according to claim 2, wherein the controller (180) is configured to control the robotic arm (140, 142) to actuate the push-push (250-256) mechanism by at least one of:
- pushing on a part of the stand; and
- pushing on a part of the sample container (400).

4. The robotic sample handling system (100) according to claim 2 or 3, wherein the effector (300) comprises at least one of:
- a magnet for subjecting the sample (420) to a magnetic field;
- a heat source for heating the sample;
- a cold source for cooling the sample;
- a vibrator for subjecting the sample to vibration;
- a water bath for receiving the sample container; and
- a radiation source for irradiating the sample.

5. The robotic sample handling system (100) according to any one of claims 2 to 4, wherein the sample container is one of:
- a liquid container (400);
- a glass or plastic slide.

6. The robotic sample handling system (100) according to any one of claims 2 to 5, wherein:
- the sample container is a liquid container (400);
- the effector (300) comprises a magnet for subjecting a liquid sample in the liquid container to a magnetic field; and
- the controller is configured to control the robotic arm (140, 142) to perform at least part of an automated magnetic bead separation process by operating the push-push mechanism (250-256) to bring the liquid sample into and out of the magnetic field.

7. The robotic sample handling system (100) according to any one of claims 1 to 6, wherein the robotic arm (142) comprises a robotic head (160) with at least one gripper (162), wherein the controller (180) is configured to control the robotic arm to actuate the mechanism (250-256, 630) with the at least one gripper.

8. The robotic sample handling system (100) according to any one of claims 1 to 7, wherein the robotic arm (140) comprises a liquid-handling head (150), wherein the controller (180) is configured to control the robotic arm (140) to actuate the mechanism (250-256, 630) with the liquid-handling head.

9. The robotic sample handling system (100) according to claim 8, wherein the liquid-handling head (150) is arranged to mount a disposable tip (156), wherein the controller (180) is configured to control the robotic arm (140) to actuate the mechanism (250-256, 630) with the liquid-handling head with or without a mounted disposable tip.

10. The robotic sample handling system (100) according to claim 8 or 9, wherein the liquid-handling head (150) is arranged to mount a fixed tip, wherein the controller (180) is configured to control the robotic arm (140) to actuate the mechanism (250-256, 630) with the liquid-handling head with a mounted fixed tip.

11. The robotic sample handling system (100) according to any one of claims 1 to 10, wherein the robotic sample handling system is one of:
- a robotic liquid handling system;
- an automated pipetting system;
- an automated robotic gripping system; and
- a microscope slide processor.

12. A computer-implemented method for controlling a robotic arm of a robotic sample handling system according to any one of claims 1 to 11, the method comprising, by the controller of the robotic sample handling system:
- receiving position data indicative of a position of a module on a work area of the robotic sample handing system, wherein the module is arranged to be used with one or more samples handled by the robotic sample handling system, wherein the module comprises a mechanism which is actuatable by downward force, wherein the mechanism is a push-push mechanism which is arranged to, by repeated pushes, alternatingly assume a latched position and an unlatched position;
- controlling the robotic arm to position the robotic arm above the module and to push downward in Z-direction so as to operate the push-push mechanism of the module.

13. A computer-readable medium comprising transitory or non-transitory data representing a computer program, the computer program comprising instructions for causing a processor system to perform the method according to claim 12.

14. Use of a module with the robotic sample handling system according to any one of claims 1 to 11, wherein the module is a stand (200-206) arranged to stand on a surface, comprising:
- a receiving part (220-226) for receiving and removably holding a sample container (400, 410) which contains a sample;
- an effector (300) for acting on samples which are placed within a predefined vicinity of the effector; and
- a push-push mechanism (250-256) actuatable by downward force when the stand stands on the surface and arranged to, by repeated downward pushes, alternatingly assume a latched position and an unlatched position and to:
- in the latched position, position (280) the sample container into the predefined vicinity (310) of the effector (300), and
- in the unlatched position, position (286) the sample container out of the predefined vicinity (310) of the effector (300).

## Patentansprüche

1. Roboterprobenhandhabungssystem (100) zum Durchführen von Probenhandhabungsaufgaben in einer Laborumgebung, umfassend:
- einen Arbeitsbereich (120) zum Halten von Proben;
- mindestens einen Roboterarm (140, 142), der steuerbar ist, um in einer zu dem Arbeitsbereich parallelen Ebene entlang einer zu dem Arbeitsbereich senkrechten Z-Achse positioniert zu werden;
- eine Steuerung (180), die dazu konfiguriert ist, den Roboterarm zu steuern, um den Roboterarm im Rahmen einer Probenhandhabungsaufgabe zu positionieren und zu betreiben;
wobei der Arbeitsbereich ein Modul (200-206, 500, 600) zur Verwendung mit einer oder mehreren der Proben umfasst, wobei das Modul einen Mechanismus (250-256, 630) umfasst, der durch eine nach unten gerichtete Kraft betätigbar ist, wobei der Mechanismus ein Druck-Druck-Mechanismus ist, der dazu ausgelegt ist, durch wiederholte Druckbewegungen abwechselnd eine verriegelte Stellung und eine entriegelte Stellung einzunehmen, und wobei die Steuerung dazu konfiguriert ist, den Roboterarm zu steuern, um den Druck-Druck-Mechanismus durch Drücken in der Z-Richtung nach unten zu betreiben.

2. Roboterprobenhandhabungssystem (100) nach Anspruch 1, wobei das Modul ein Ständer (200-206) ist, wobei der Ständer Folgendes umfasst:
- ein Aufnahmeteil (220-226) zum Aufnehmen und lösbaren Halten eines Probenbehälters (400, 410);
- einen Effektor (300) zum Wirken auf eine Probe, die innerhalb eines vordefinierten Nahbereichs des Effektors platziert wird; und
- den Druck-Druck-Mechanismus (250-256), der zu Folgendem ausgelegt ist:
- in der verriegelten Stellung Positionieren (280) des Probenbehälters in dem vordefinierten Nahbereich (310) des Effektors (300); und
- in der entriegelten Stellung Positionieren (286) des Probenbehälters außerhalb des vordefinierten Nahbereichs (310) des Effektors (300).

3. Roboterprobenhandhabungssystem (100) nach Anspruch 2, wobei die Steuerung (180) dazu konfiguriert ist, den Roboterarm (140, 142) zu steuern, um den Druck-Druck-Mechanismus (250-256) durch mindestens eines von Folgendem zu betätigen:
- Drücken auf einen Teil des Ständers; und
- Drücken auf einen Teil des Probenbehälters (400).

4. Roboterprobenhandhabungssystem (100) nach Anspruch 2 oder 3, wobei der Effektor (300) mindestens eines von Folgendem umfasst:
- einen Magnet zum Beaufschlagen der Probe (420) mit einem Magnetfeld;
- eine Wärmequelle zum Erhitzen der Probe;
- eine Kältequelle zum Kühlen der Probe;
- einen Schwingungserzeuger zum Beaufschlagen der Probe mit Schwingungen;
- ein Wasserbad zum Aufnehmen des Probenbehälters; und
- eine Strahlungsquelle zum Bestrahlen der Probe.

5. Roboterprobenhandhabungssystem (100) nach einem der Ansprüche 2 bis 4, wobei der Probenbehälter eines von Folgendem ist:
- einem Flüssigkeitsbehälter (400);
- einem Glas- oder Kunststoffobjektträger.

6. Roboterprobenhandhabungssystem (100) nach einem der Ansprüche 2 bis 5, wobei:
- der Probenbehälter ein Flüssigkeitsbehälter (400) ist;
- der Effektor (300) einen Magnet zum Beaufschlagen einer Flüssigkeitsprobe in dem Flüssigkeitsbehälter mit einem Magnetfeld umfasst; und
- die Steuerung dazu konfiguriert ist, den Roboterarm (140, 142) zu steuern, um mindestens einen Teil eines automatisierten Magnetperlentrennungsprozesses durchzuführen, indem der Druck-Druck-Mechanismus (250-256) betrieben wird, um die Flüssigkeitsprobe in das Magnetfeld hinein- und aus ihm herauszuführen.

7. Roboterprobenhandhabungssystem (100) nach einem der Ansprüche 1 bis 6, wobei der Roboterarm (142) einen Roboterkopf (160) mit mindestens einem Greifer (162) umfasst, wobei die Steuerung (180) dazu konfiguriert ist, den Roboterarm zu steuern, um den Mechanismus (250-256, 630) mit dem mindestens einen Greifer zu betätigen.

8. Roboterprobenhandhabungssystem (100) nach einem der Ansprüche 1 bis 7, wobei der Roboterarm (140) einen Flüssigkeitshandhabungskopf (150) umfasst, wobei die Steuerung (180) dazu konfiguriert ist, den Roboterarm (140) zu steuern, um den Mechanismus (250-256, 630) mit dem Flüssigkeitshandhabungskopf zu betätigen.

9. Roboterprobenhandhabungssystem (100) nach Anspruch 8, wobei der Flüssigkeitshandhabungskopf (150) dazu ausgelegt ist, eine Einwegspitze (156) zu montieren, wobei die Steuerung (180) dazu konfiguriert ist, den Roboterarm (140) zu steuern, um den Mechanismus (250-256, 630) mit dem Flüssigkeitshandhabungskopf mit oder ohne eine montierte Einwegspitze zu betätigen.

10. Roboterprobenhandhabungssystem (100) nach Anspruch 8 oder 9, wobei der Flüssigkeitshandhabungskopf (150) dazu ausgelegt ist, eine feste Spitze zu montieren, wobei die Steuerung (180) dazu konfiguriert ist, den Roboterarm (140) zu steuern, um den Mechanismus (250-256, 630) mit dem Flüssigkeitshandhabungskopf mit einer montierten festen Spitze zu betätigen.

11. Roboterprobenhandhabungssystem (100) nach einem der Ansprüche 1 bis 10, wobei das Roboterprobenhandhabungssystem eines von Folgendem ist:
- einem Roboterflüssigkeitshandhabungssystem;
- einem automatisierten Pipettiersystem;
- einem automatisierten Robotergreifsystem; und
- einem Mikroskopobjektträgerprozessor.

12. Computerimplementiertes Verfahren zum Steuern eines Roboterarms eines Roboterprobenhandhabungssystems nach einem der Ansprüche 1 bis 11, wobei das Verfahren folgende von der Steuerung des Roboterprobenhandhabungssystems ausgeführte Schritte umfasst:
- Empfangen von Stellungsdaten, die eine Stellung eines Moduls auf einem Arbeitsbereich des Roboterprobenhandhabungssystems angeben, wobei das Modul dazu ausgelegt ist, mit einer oder mehreren von dem Roboterprobenhandhabungssystem gehandhabten Proben verwendet zu werden, wobei das Modul einen Mechanismus umfasst, der durch eine nach unten gerichtete Kraft betätigbar ist, wobei der Mechanismus ein Druck-Druck-Mechanismus ist, der dazu ausgelegt ist, durch wiederholte Druckbewegungen abwechselnd eine verriegelte Stellung und eine entriegelte Stellung einzunehmen;
- Steuern des Roboterarms, um den Roboterarm über dem Modul zu positionieren und in der Z-Richtung nach unten zu drücken, um den Druck-Druck-Mechanismus des Moduls zu betreiben.

13. Computerlesbares Medium, das transitorische oder nichttransitorische Daten umfasst, die ein Computerprogramm repräsentieren, wobei das Computerprogramm Anweisungen umfasst, um zu bewirken, dass ein Prozessorsystem das Verfahren nach Anspruch 12 durchführt.

14. Verwendung eines Moduls mit dem Roboterprobenhandhabungssystem nach einem der Ansprüche 1 bis 11, wobei das Modul ein Ständer (200-206) ist, der dazu ausgelegt ist, auf einer Oberfläche zu stehen, umfassend:
- ein Aufnahmeteil (220-226) zum Aufnehmen und lösbaren Halten eines Probenbehälters (400, 410), der eine Probe enthält;
- einen Effektor (300) zum Wirken auf Proben, die innerhalb eines vordefinierten Nahbereichs des Effektors platziert werden; und
- einen Druck-Druck-Mechanismus (250-256), der durch eine nach unten gerichtete Kraft betätigbar ist, wenn der Ständer auf der Oberfläche steht, und dazu ausgelegt ist, durch wiederholte nach unten gerichtete Druckbewegungen abwechselnd eine verriegelte Stellung und eine entriegelte Stellung einzunehmen, und zu Folgendem ausgelegt ist:
- in der verriegelten Stellung Positionieren (280) des Probenbehälters in dem vordefinierten Nahbereich (310) des Effektors (300) und
- in der entriegelten Stellung Positionieren (286) des Probenbehälters außerhalb des vordefinierten Nahbereichs (310) des Effektors (300).

## Revendications

1. Système robotisé de manipulation d'échantillons (100) destiné à réaliser des tâches de manipulation d'échantillons dans un environnement de laboratoire, comprenant :
- une zone de travail (120) destinée à maintenir des échantillons ;
- au moins un bras robotisé (140, 142) commandable pour être positionné dans un plan parallèle à la zone de travail et le long d'un axe Z perpendiculaire à la zone de travail ;
- un contrôleur (180) configuré pour commander le bras robotisé afin de positionner et de faire fonctionner le bras robotisé dans le cadre d'une tâche de manipulation d'échantillons ;
dans lequel la zone de travail comprend un module (200-206, 500, 600) destiné à être utilisé avec un ou plusieurs des échantillons, le module comprenant un mécanisme (250-256, 630) actionnable par une force vers le bas, le mécanisme étant un mécanisme à poussées successives agencé pour, par des poussées répétées, adopter alternativement une position verrouillée et une position déverrouillée, et le contrôleur étant configuré pour commander le bras robotisé afin de faire fonctionner le mécanisme à poussées successives par poussée vers le bas dans la direction Z.

2. Système robotisé de manipulation d'échantillons (100) selon la revendication 1, dans lequel le module est un support (200-206), le support comprenant :
- une partie de réception (220-226) destinée à recevoir et à maintenir de manière amovible un récipient d'échantillon (400, 410) ;
- un effecteur (300) destiné à agir sur un échantillon placé dans un voisinage prédéfini de l'effecteur ; et
- le mécanisme à poussées successives (250-256), agencé pour :
- dans la position verrouillée, positionner (280) le récipient d'échantillon dans le voisinage prédéfini (310) de l'effecteur (300), et
- dans la position déverrouillée, positionner (286) le récipient d'échantillon hors du voisinage prédéfini (310) de l'effecteur (300).

3. Système robotisé de manipulation d'échantillons (100) selon la revendication 2, dans lequel le contrôleur (180) est configuré pour commander le bras robotisé (140, 142) afin d'actionner le mécanisme à poussées successives (250-256) par au moins l'une parmi :
- une poussée sur une partie du support ; et
- une poussée sur une partie du récipient d'échantillon (400).

4. Système robotisé de manipulation d'échantillons (100) selon la revendication 2 ou 3, dans lequel l'effecteur (300) comprend au moins l'un des éléments suivants :
- un aimant destiné à soumettre l'échantillon (420) à un champ magnétique ;
- une source de chaleur destinée à chauffer l'échantillon ;
- une source de froid destinée à refroidir l'échantillon ;
- un vibreur destiné à soumettre l'échantillon à des vibrations ;
- un bain d'eau destiné à recevoir le récipient d'échantillon ; et
- une source de rayonnement destiné à exposer l'échantillon à un rayonnement.

5. Système robotisé de manipulation d'échantillons (100) selon l'une quelconque des revendications 2 à 4, dans lequel le récipient d'échantillon est l'un des éléments suivants :
- un récipient de liquide (400) ;
- une lame en verre ou en matière plastique.

6. Système robotisé de manipulation d'échantillons (100) selon l'une quelconque des revendications 2 à 5, dans lequel :
- le récipient d'échantillon est un récipient de liquide (400) ;
- l'effecteur (300) comprend un aimant destiné à soumettre un échantillon liquide dans le récipient de liquide à un champ magnétique ; et
- le contrôleur est configuré pour commander le bras robotisé (140, 142) afin de réaliser au moins une partie d'un processus automatisé de séparation par billes magnétiques par fonctionnement du mécanisme à poussées successives (250-256) de manière à amener l'échantillon liquide dans le champ magnétique et hors de celui-ci.

7. Système robotisé de manipulation d'échantillons (100) selon l'une quelconque des revendications 1 à 6, dans lequel le bras robotisé (142) comprend une tête robotisée (160) pourvue d'au moins un préhenseur (162), le contrôleur (180) étant configuré pour commander le bras robotisé afin d'actionner le mécanisme (250-256, 630) au moyen de l'au moins un préhenseur.

8. Système robotisé de manipulation d'échantillons (100) selon l'une quelconque des revendications 1 à 7, dans lequel le bras robotisé (140) comprend une tête de manipulation de liquide (150), le contrôleur (180) étant configuré pour commander le bras robotisé (140) afin d'actionner le mécanisme (250-256, 630) au moyen de la tête de manipulation de liquide.

9. Système robotisé de manipulation d'échantillons (100) selon la revendication 8, dans lequel la tête de manipulation de liquide (150) est agencée pour permettre le montage d'un embout jetable (156), le contrôleur (180) étant configuré pour commander le bras robotisé (140) afin d'actionner le mécanisme (250-256, 630) au moyen de la tête de manipulation de liquide avec ou sans embout jetable monté.

10. Système robotisé de manipulation d'échantillons (100) selon la revendication 8 ou 9, dans lequel la tête de manipulation de liquide (150) est agencée pour permettre le montage d'un embout fixe, le contrôleur (180) étant configuré pour commander le bras robotisé (140) afin d'actionner le mécanisme (250-256, 630) au moyen de la tête de manipulation de liquide avec un embout fixe monté.

11. Système robotisé de manipulation d'échantillons (100) selon l'une quelconque des revendications 1 à 10, dans lequel le système robotisé de manipulation d'échantillons est l'un des éléments suivants :
- un système robotisé de manipulation des liquides ;
- un système automatisé de pipetage ;
- un système robotisé automatisé de préhension ; et
- un système de traitement de lames de microscope.

12. Procédé, mis en œuvre par ordinateur, de commande d'un bras robotisé d'un système robotisé de manipulation d'échantillons selon l'une quelconque des revendications 1 à 11, le procédé comprenant, par le contrôleur du système robotisé de manipulation d'échantillons :
- la réception de données de position indiquant une position d'un module sur une zone de travail du système robotisé de manipulation d'échantillons, le module étant agencé pour être utilisé avec un ou plusieurs échantillons manipulés par le système robotisé de manipulation d'échantillons, le module comprenant un mécanisme actionnable par une force vers le bas, le mécanisme étant un mécanisme à poussées successives conçu pour, par des poussées répétées, adopter alternativement une position verrouillée et une position déverrouillée ;
- la commande du bras robotisé afin de positionner le bras robotisé au-dessus du module et de lui faire exercer une poussée vers le bas dans la direction Z de manière à actionner le mécanisme à poussées successives du module.

13. Support lisible par ordinateur comprenant des données transitoires ou non transitoires représentant un programme d'ordinateur, le programme d'ordinateur comprenant des instructions destinées à amener un système de processeurs à réaliser le procédé selon la revendication 12.

14. Utilisation d'un module dans le système robotisé de manipulation d'échantillons selon l'une quelconque des revendications 1 à 11, le module étant un support (200-206) agencé pour être disposé en position debout sur une surface, comprenant :
- une partie de réception (220-226) destinée à recevoir et à maintenir de manière amovible un récipient d'échantillon (400, 410) contenant l'échantillon ;
- un effecteur (300) destiné à agir sur des échantillons placés dans un voisinage prédéfini de l'effecteur ; et
- un mécanisme à poussées successives (250-256) actionnable par une force vers le bas lorsque le support est disposé en position debout sur la surface et agencé pour, par des poussées répétées vers le bas, adopter alternativement une position verrouillée et une position déverrouillée et pour :
- dans la position verrouillée, positionner (280) le récipient d'échantillon dans le voisinage prédéfini (310) de l'effecteur (300), et
- dans la position déverrouillée, positionner (286) le récipient d'échantillon hors du voisinage prédéfini (310) de l'effecteur (300).
